# EUROPEAN PATENT APPLICATION

(11) **EP 4 306 996 A1**
(43) Date of publication of application: **17.01.2024**
(21) Application number: 22767179.9
(22) Date of filing: 09.03.2022
(51) Int. Cl.: G01S 7/484, G01S 7/481, G01S 17/87, G01S 17/931

(54) **MEASURING DEVICE, POSITION IDENTIFYING SYSTEM, MEASURING SYSTEM, AND MONITORING SYSTEM**

(30) Priority: 10.03.2021 JP 2021038082
(71) Applicant: Pioneer Corporation, Tokyo 113-0021 (JP); Pioneer Smart Sensing Innovations Corporation, Tokyo 113-0021 (JP)
(72) Inventor: KOUTSUKA Yousuke, Kawagoe-shi, Saitama 350-8555 (JP)
(74) Representative: Vossius & Partner Patentanwälte Rechtsanwälte mbB
(86) International application number: PCT/JP2022/010220
(87) International publication number: WO 2022/191225

(57) **Abstract**

A measuring apparatus (10) is a device that scans and measures a target with pulsed light. A measuring apparatus (10) includes a light emitting element (12), a light receiving unit (14), a movable mirror (16), and a control unit (18). The light emitting element (12) emits the pulsed light. The light receiving unit (14) receives the reflected pulsed light. The movable mirror (16) changes an emission direction of the pulsed light. The control unit (18) controls a light emission intensity of the light emitting element (12). In the measuring apparatus (10), a reflecting surface of the movable mirror (16) is oscillated in a sinusoidal waveform so that the emission direction of the pulsed light reciprocates back and forth in a first direction (101). The control unit (18) emits the pulsed light having a higher intensity to an end part region (112) including an end of a scanning range in the first direction (101) than to a central region (114) including a center of the scanning range in the first direction (101).

## Description

### TECHNICAL FIELD

The present invention relates to a measuring apparatus, a position determination system, a measuring system, and a monitoring system.

### BACKGROUND ART

In order to improve the accuracy of autonomous driving of vehicles, and the like, it is important to improve the performance of measuring apparatuses that measure surrounding situations. As one of such measuring apparatuses, there is a apparatus that performs measurement by scanning the surroundings with pulsed light.

Patent Document 1 describes increasing the sensitivity of a part of a detection region based on traveling state information and external environment information of a vehicle. Examples of a method of increasing the sensitivity include a method of adding received light values of at least some of a light receiving element group over a plurality of detection periods and a method of reducing an interval at which a light projection unit projects measurement light and increasing the number of times the measurement light is projected within the detection period.

Patent document 2 describes performing measurement using patterns of a plurality of pulses with irradiation intensities different from each other in a LIDAR apparatus in which a pulse irradiation source and a photosensitive detector rotate with respect to a base frame.

### RELATED DOCUMENT

### PATENT DOCUMENT

Patent Document 1: Japanese Unexamined Patent Publication No. 2015-135273
Patent Document 2: PCT Japanese Translation Patent Publication No. 2019-512705

### SUMMARY OF THE INVENTION

### TECHNICAL PROBLEM

Meanwhile, pulsed light used in the measuring apparatus has a high power density. Therefore, it is necessary to ensure the safety of a human body so as not to cause any harm to a user or people around due to pulse irradiation.

An example of the problem to be solved by the present invention is to increase a measurable distance while ensuring the safety of the human body.

### SOLUTION TO PROBLEM

According to the invention described in claim 1,
there is provided a measuring apparatus that scans and measures a target with pulsed light, the measuring apparatus including:
a light emitting element configured to emit the pulsed light;
a light receiving unit configured to receive the reflected pulsed light;
a movable mirror configured to change an emission direction of the pulsed light; and
a control unit configured to control a light emission intensity of the light emitting element,
in which a reflecting surface of the movable mirror is oscillated in a sinusoidal waveform so that the emission direction of the pulsed light reciprocates back and forth in a first direction, and
the control unit is configured to emit the pulsed light having a higher intensity to an end part region including an end of a scanning range in the first direction than to a central region including a center of the scanning range in the first direction.

According to the invention described in claim 9,
there is provided a position determination system including:
the measuring apparatus according to any one of claims 1 to 8 provided with a moving object;
an acquisition unit configured to acquire map information; and
a position determination unit configured to determine a position of the moving object based on the acquired map information and a measurement result of the measuring apparatus.

According to the invention described in claim 10,
there is provided a measuring system including:
a plurality of the measuring apparatuses according to any one of claims 1 to 8,
in which the scanning range of one of the measuring apparatuses and the scanning range of another one of the measuring apparatuses are adjacent to each other in the first direction.

According to the invention described in claim 13,
there is provided a monitoring system including:
two or more measuring apparatuses according to any one of claims 1 to 8,
in which one of the measuring apparatuses and another one of the measuring apparatuses are provided to face each other in a plan view.

### BRIEF DESCRIPTION OF THE DRAWINGS

Fig. 1 is a diagram illustrating a configuration of a measuring apparatus according to a first embodiment.
Fig. 2 is a diagram illustrating a hardware configuration of a control unit according to the first embodiment.
Fig. 3 is a diagram illustrating an emission direction (emission angle) of pulsed light according to the first embodiment.
Fig. 4 is a diagram illustrating a relationship between time and the emission angle in one line scan in a first direction according to the first embodiment.
Fig. 5 is a diagram illustrating a change in pulse intensity (emission power) according to the first embodiment.
Fig. 6 is a diagram illustrating a measurable region of the measuring apparatus according to the first embodiment.
Fig. 7 is a diagram showing a first modification example of the change in pulse intensity according to the first embodiment.
Fig. 8 is a diagram showing a second modification example of the change in pulse intensity according to the first embodiment.
Fig. 9 is a diagram showing a third modification example of the change in pulse intensity according to the first embodiment.
Fig. 10 is a diagram illustrating a relationship between a light emitting element and a movable mirror according to a second embodiment.
Fig. 11 is a diagram illustrating a measurable region of a measuring apparatus according to the second embodiment.
Fig. 12 is a block diagram illustrating a functional configuration of the measuring apparatus according to the second embodiment.
Fig. 13 is a block diagram illustrating the configuration of a position determination system according to a third embodiment.
Fig. 14 is a diagram illustrating a usage environment of the position determination system according to the third embodiment.
Fig. 15 is a block diagram illustrating a configuration of a measuring system according to a fourth embodiment.
Fig. 16 is a block diagram illustrating a usage environment of the measuring system according to the fourth embodiment.
Fig. 17 is a diagram illustrating a configuration and a usage environment of a monitoring system according to a fifth embodiment.
Fig. 18 is a diagram showing a comparative example of the monitoring system.

### DESCRIPTION OF EMBODIMENTS

Hereinafter, embodiments of the present invention will be described with reference to the drawings. In all of the drawings, the same constituent elements are designated by the same reference numerals, and the description thereof will not be repeated as appropriate.

### (First Embodiment)

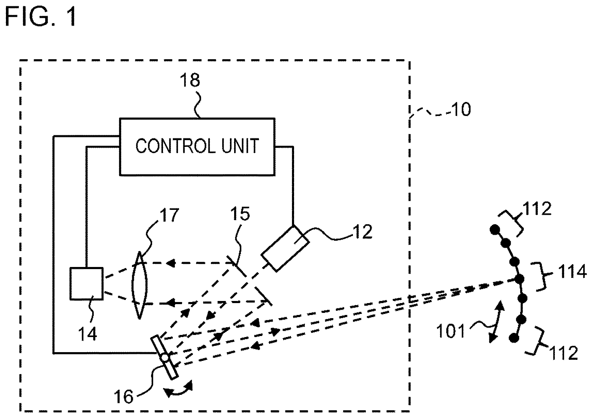

Fig. 1 is a diagram illustrating a configuration of a measuring apparatus 10 according to a first embodiment. The measuring apparatus 10 is an apparatus that scans and measures a target with pulsed light. The measuring apparatus 10 includes a light emitting element 12, a light receiving unit 14, a movable mirror 16, and a control unit 18. The light emitting element 12 emits the pulsed light. The light receiving unit 14 receives the reflected pulsed light. The movable mirror 16 changes an emission direction of the pulsed light. The control unit 18 controls a light emission intensity of the light emitting element 12. In the measuring apparatus 10, a reflecting surface of the movable mirror 16 is oscillated in a sinusoidal waveform so that the emission direction of the pulsed light reciprocates back and forth in a first direction 101. The control unit 18 emits the pulsed light having a higher intensity to an end part region 112 including an end of a scanning range in the first direction 101 than to a central region 114 including a center of the scanning range in the first direction 101. The details will be described below.

The measuring apparatus 10 is an apparatus that measures a distance from the measuring apparatus 10 to an object located within a scanning range based on, for example, a difference between an emission timing of pulsed light and a reception timing of reflected light (reflected pulsed light). The pulsed light is light such as infrared light, for example. In addition, the pulsed light is, for example, a laser pulse. The pulsed light that is output from the light emitting element 12 and that is emitted to the outside of the measuring apparatus 10 is reflected by the object, and at least a part thereof returns toward the measuring apparatus 10. Then, the reflected light is incident on the measuring apparatus 10. The reflected light incident on the measuring apparatus 10 is received by the light receiving unit 14 and the intensity thereof is detected. Here, the measuring apparatus 10 measures the time from when the pulsed light is emitted from the light emitting element 12 to when the reflected light is detected by the light receiving unit 14. Then, the control unit 18 calculates the distance between the measuring apparatus 10 and the object using the measured time and the propagation speed of the pulsed light. The measuring apparatus 10 is, for example, a laser imaging detection and ranging or laser illuminated detection and ranging (LIDAR) apparatus, a light detection and ranging (LiDAR) apparatus, a radar apparatus, or the like.

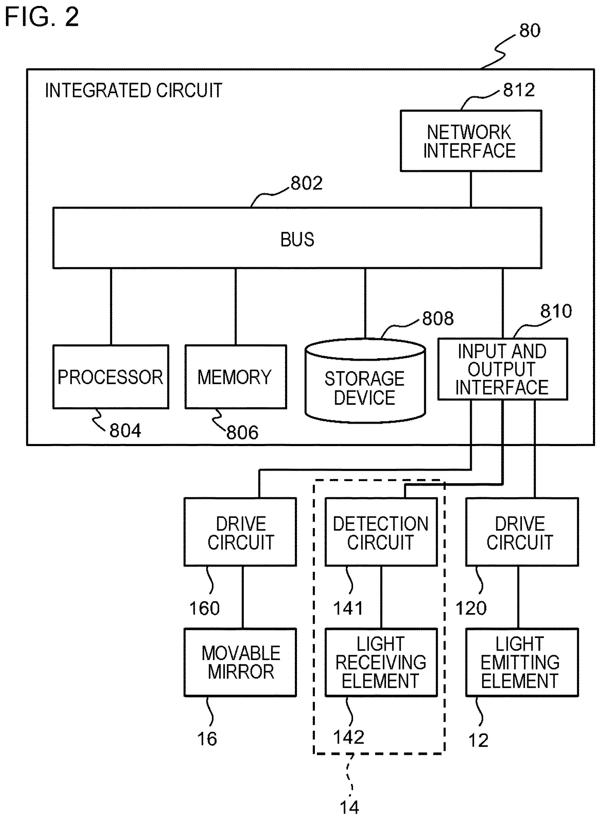

The light receiving unit 14 receives the pulsed light incident on the measuring apparatus 10. As shown in Fig. 2, which will be described below, the light receiving unit 14 includes a light receiving element 142 and a detection circuit 141. The light receiving element 142 is a photodiode such as an avalanche photodiode (APD), for example. The light receiving element 142 includes an I-V converter and an amplifier and outputs a signal indicating the detected intensity of light by the light receiving element 142.

The movable mirror 16 is, for example, a uniaxially movable or biaxially movable MEMS mirror. By changing a direction of a reflecting surface of the movable mirror 16, the emission direction of the pulsed light emitted from the measuring apparatus 10 can be changed. The movable mirror 16 oscillates in a sinusoidal waveform with at least one axis as an oscillation axis. This sinusoidal wave-like oscillation may be oscillation at the resonant frequency of the movable mirror 16. The sinusoidal wave-like oscillation of the movable mirror 16 changes the emission direction of the pulsed light to the first direction 101.

In a case where the movable mirror 16 is a biaxially movable MEMS mirror, the movable mirror 16 need only oscillate in a sinusoidal waveform with respect to at least one axis. With respect to the other axis, for example, the movable mirror 16 may oscillate in a triangular waveform or a sawtooth waveform. A raster scan can be performed within a predetermined range with pulsed light by biaxially driving the movable mirror 16. Scan with pulsed light will be described below in detail.

In the example of this diagram, the measuring apparatus 10 further includes a perforated mirror 15 and a condenser lens 17. The pulsed light output from the light emitting element 12 passes through a hole of the perforated mirror 15, is reflected by the movable mirror 16, and then is emitted from the measuring apparatus 10. In addition, reflected light incident on the measuring apparatus 10 is reflected by the movable mirror 16 and the perforated mirror 15, and then is incident on the light receiving unit 14 through the condenser lens 17. The measuring apparatus 10 may further include a collimating lens, a mirror, and the like.

The control unit 18 controls the light emitting element 12, the light receiving unit 14, and the movable mirror 16. Further, the control unit 18 calculates the distance from the measuring apparatus 10 to the object within the scanning range as described above.

Fig. 2 is a diagram illustrating a hardware configuration of the control unit 18 according to the present embodiment. In this diagram, the control unit 18 is implemented using an integrated circuit 80 and an electronic circuit. The integrated circuit 80 is, for example, a system-on-chip (SoC). The electronic circuit is, for example, a drive circuit 120 of the light emitting element 12 or a drive circuit 160 of the movable mirror 16.

The integrated circuit 80 includes a bus 802, a processor 804, a memory 806, a storage device 808, an input and output interface 810, and a network interface 812. The bus 802 is a data transmission path for the processor 804, the memory 806, the storage device 808, the input and output interface 810, and the network interface 812 to transmit and receive data to and from each other. However, a method of mutually connecting the processor 804 and the like is not limited to bus connection. The processor 804 is an arithmetic processing device implemented using a microprocessor or the like. The memory 806 is a memory implemented using a random access memory (RAM) or the like. The storage device 808 is a storage device implemented using a read only memory (ROM), a flash memory, or the like.

The input and output interface 810 is an interface for connecting the integrated circuit 80 to peripheral devices. In this diagram, the drive circuit 120 of the light emitting element 12, the detection circuit 141 of the light receiving element 142, and the drive circuit 160 of the movable mirror 16 are connected to the input and output interface 810.

The network interface 812 is an interface for connecting the integrated circuit 80 to a communication network. This communication network is, for example, a controller area network (CAN) communication network. A method of connecting the network interface 812 to the communication network may be a wireless connection or a wired connection.

The storage device 808 stores a program module for implementing the function of the control unit 18. The processor 804 reads out and executes the program module on the memory 806, thereby implementing the function of the control unit 18.

The hardware configuration of the integrated circuit 80 is not limited to the configuration shown in this diagram. For example, the program module may be stored in the memory 806. In this case, the integrated circuit 80 may not include the storage device 808.

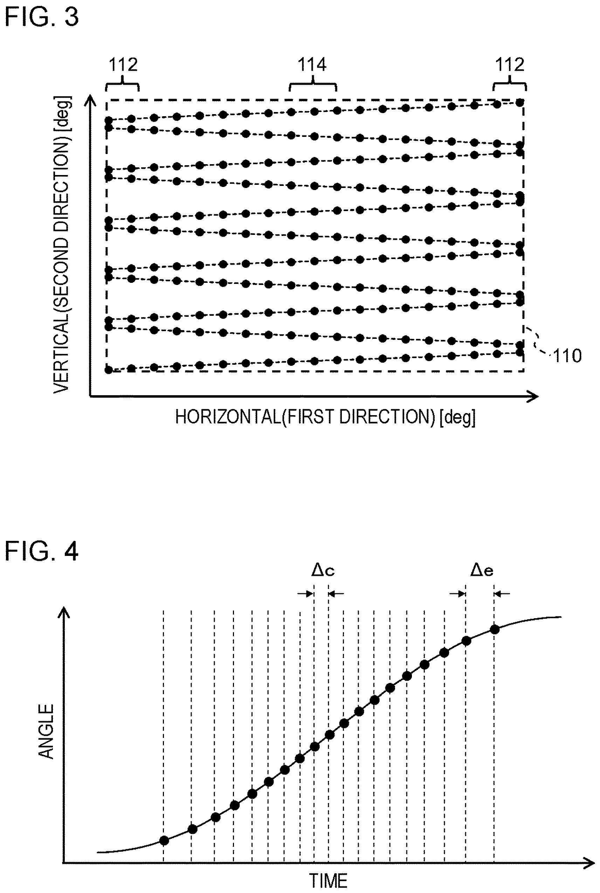

Fig. 3 is a diagram illustrating an emission direction (emission angle) of pulsed light according to the present embodiment. This diagram shows an example in which the movable mirror 16 is biaxially movable and a raster scan is performed with pulsed light. The two oscillation axes of the movable mirror 16 are orthogonal to each other. In the example of this diagram, a horizontal direction corresponds to the first direction 101. In the present embodiment, the emission angle of the pulsed light changes at equal angular deviation in the first direction 101 from one end to the other end of a scanning range 110. In addition, in the example of this diagram, the emission direction of the pulsed light reciprocates in the first direction 101 direction and also changes in a second direction perpendicular to the first direction 101. In this way, by changing the emission direction of the pulsed light with the movable mirror 16, the scanning range 110 can be scanned with the pulsed light. By detecting reflected light from the object present within the scanning range 110, the distance from the measuring apparatus 10 to the object can be measured. Although this diagram shows an example in which pulsed light is emitted in both the forward and backward directions in the scan in the first direction 101, the pulsed light may be emitted only in either the forward or backward direction.

The scanning range 110 includes the end part region 112 and the central region 114. The end part region 112 includes the end of the scanning range 110 in the first direction 101 direction. The end part regions 112 are present at both ends of one scanning range 110. The central region 114 includes the center of the scanning range 110 in the first direction 101 direction. The widths of the end part region 112 and the central region 114 are each, for example, a scanning width per unit time. Here, the unit time is a unit time based on eye-safe regulations and is, for example, within 5 µs. In addition, the end part region 112 may be, at each end, a region that includes first and second pulsed light from the end and does not include a third pulsed light. The angular widths of the end part region 112 and the central region 114 may be each 10% or 20% of the scanning angular width of the scanning range 110 in the first direction 101.

The end of the end part region 112 matches the end of the scanning range 110. The pulse intensity may or may not change inside the end part region 112. In addition, the pulse intensity may or may not change inside the central region 114.

Fig. 4 is a diagram illustrating a relationship between the time and the emission angle in one line scan in the first direction 101 according to the present embodiment. In a case where the emitted pulsed light is plotted on a graph with time as the horizontal axis and the emission angle in the first direction 101 as the vertical axis as shown in this diagram, the plot draws a sinusoidal wave. In a case where the movable mirror 16 oscillates in a sinusoidal waveform, the angular velocity of the angle change of the reflecting surface is higher near the center of the oscillation than near the end. Therefore, in a case where pulsed light is emitted at equal angular intervals as shown in Fig. 3, Δc < Δe is satisfied. Here, Δc is a time interval of the pulsed light at the center of the first direction 101 and Δe is a time interval of the pulsed light at the end of the first direction 101. In other words, the pulse number density in the end part region 112 is less than the pulse number density in the central region 114.

Conditions for pulsed light emission are determined to ensure the safety of the human body. Specifically, it is necessary to satisfy the following first to third conditions.
(First condition) The energy of each pulsed light is equal to or less than a predetermined value.
(Second condition) The energy determined by the number of pulses and the pulse train is equal to or less than a predetermined value. Note that pulses of light within 5 µs are regarded as one pulse of light.
(Third condition) The average energy of the pulses of light per 10 seconds is equal to or less than a predetermined value.

Here, in a case of attempting to satisfy the second condition, it is necessary to ensure that the total energy of pulsed light within 5 µs is equal to or less than a predetermined value. In the measuring apparatus 10 according to the present embodiment, as described above, Δc and Δe are different from each other, and the number of pulses per 5 seconds in the end part region 112 is less than the number of pulses per 5 seconds in the central region 114. For example, the number of pulses per 5 seconds in the end part region 112 is no more than 1 pulse, and the number of pulses per 5 seconds in the central region 114 is more than 1 pulse. As a result, the upper limit value of one pulse energy may differ between the end part region 112 and the central region 114.

In the present embodiment, the emission interval of the pulsed light is less than 5 µs in the central region 114 and the emission interval of the pulsed light is equal to or greater than 5 µs in the end part region 112. In a case where the width of the end part region 112 is the scanning width per 5 µs, each end part region 112 includes only the first pulsed light from the end. Δc is less than 5 µs and Δe is equal to or greater than 5 µs.

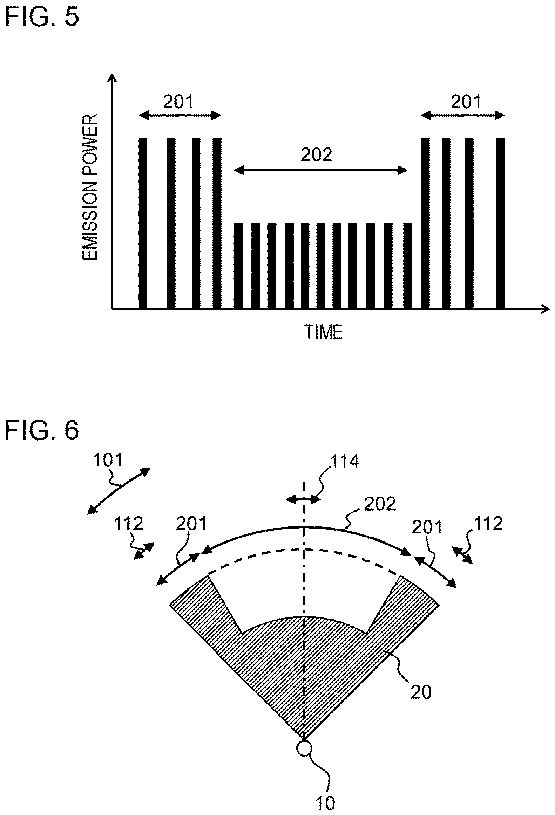

Fig. 5 is a diagram illustrating a change in pulse intensity (emission power) according to the present embodiment. A region 201 is a region where the pulse interval is equal to or greater than 5 µs. That is, the number of pulses emitted within any 5 us in the region 201 is equal to or less than one. The end part region 112 is included in the region 201. In addition, a region 202 is a region where the pulse interval is shorter than 5 µs. Specifically, in the region 202, the pulse interval is equal to or greater than 2.5 µs and less than 5 µs, and two pulses are emitted within 5 µs. The central region 114 is included in the region 202.

In the present embodiment, the pulse intensity of the region 202 is set to satisfy the second condition described above. In the region 202, two pulses are emitted within 5 µs, whereas the pulse interval is longer than 5 µs in the region 201. Therefore, the upper limit of the pulse intensity defined by the second condition in the region 201 is twice the upper limit of the pulse intensity in the region 202. The pulse intensity in the end part region 112 can be made greater than the upper limit of the pulse intensity in the central region 114 defined by the second condition.

In the example of this diagram, the pulse intensity within the region 201 is constant and the pulse intensity within the region 202 is constant. However, the pulse intensity within the region 201 may not be constant, and the pulse intensity within the region 202 may not be constant. The intensity of each pulse in the region 201 is greater than the intensity of each pulse in the region 202. The average intensity of the pulses of light in the region 201 is greater than the average intensity of the pulses of light in the region 202. In a case where a plurality of pulses of light are emitted into the end part region 112, the intensities of the pulses of light within the end part region 112 may be constant or may be different from each other. In a case where a plurality of pulses of light are emitted into the central region 114, the intensities of the pulses of light within the central region 114 may be constant or may be different from each other. The average intensity of the pulses of light within the end part region 112 is greater than the average intensity of the pulses of light within the central region 114. However, the pulse intensity pattern is not limited to the example of this diagram.

The pulse intensity of each region need only be smaller than the upper limit defined by the second condition and need not match. For example, the intensity of each pulse of the end part region 112 is equal to or greater than 1.9 times and equal to or less than 2.1 times the intensity of each pulse in the central region 114. Further, for example, the total pulse intensity within 5 µs in the end part region 112 may be equal to or greater than 90% and equal to or less than 110%, or equal to or greater than 95% and equal to or less than 1050 of the total pulse intensity within 5 µs in the central region 114.

The control unit 18 controls the pulse intensity, for example, as shown in this diagram, to emit pulsed light having a higher intensity to the end part region 112 than to the central region 114. The control unit 18 may be switchable between a mode in which the pulse intensity is changed in the scanning line in the first direction 101 and a mode in which the pulse intensity is not changed, or may always emit pulsed light having a higher intensity to the end part region 112 than to the central region 114.

Fig. 6 is a diagram illustrating a measurable region 20 of the measuring apparatus 10 according to the present embodiment. This diagram shows a view from a direction perpendicular to a plane including scanning line in the first direction 101. In the present embodiment, since the pulse intensity of the end part region 112 is higher than the pulse intensity of the central region 114, the measurable distance of the end part region 112 by the pulsed light is longer than the measurable distance of the central region 114 by the pulsed light. Therefore, it is possible to increase the measurable distance at the end of the scanning range 110 in the first direction 101 direction. In addition, the S/N ratio becomes high, and the measurement accuracy can be enhanced, at the end of the scanning range 110. By making the pulse intensity of the end part region 112 greater than the pulse intensity of the central region 114 while considering the upper limit value of each region, it is possible to improve the measurement performance of the entire measuring apparatus 10 as compared with a case where the intensities of all the pulses are uniformly determined in conformity with the upper limit in the central region 114.

The control unit 18 may control the light receiving unit 14 such that the signal multiplication factor of the light receiving unit 14 in the end part region 112 is lower than the signal multiplication factor of the light receiving unit 14 in the central region 114. Further, the light receiving unit 14 may be controlled such that the signal multiplication factor of the light receiving unit 14 is lowered as the pulse intensity in a region becomes higher. For example, in a case where the light receiving element 142 is an avalanche photodiode, the signal multiplication factor of the light receiving unit 14 can be changed by changing the voltage applied to the avalanche photodiode. By lowering the signal multiplication factor of the light receiving unit 14 in the region where the pulse intensity is high, signal saturation of the light receiving element 142 can be avoided and highly accurate measurement can be performed.

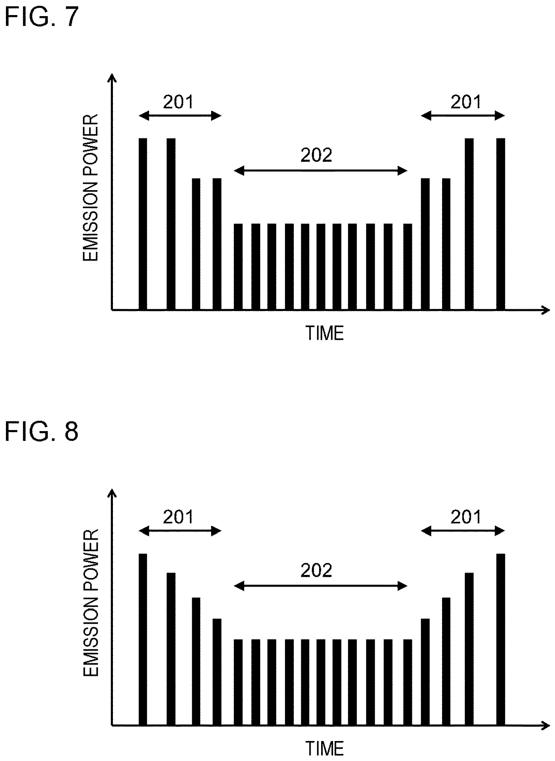

Fig. 7 is a diagram showing a first modification example of the change in pulse intensity according to the present embodiment. In this modification example, the control unit 18 changes the intensity of the pulsed light in three or more levels in the first direction 101. The region 201 is a region where the pulse interval is equal to or greater than 5 µs. The region 202 is a region where the pulse interval is shorter than 5 µs. In this modification example, the pulse intensity may further be changed within each region 201. By doing so, the amount of change in pulse intensity between adjacent pulses can be reduced, and the operation of the measuring apparatus 10 can be stabilized. In this modification example as well, the pulse intensity in the end part region 112 is higher than the pulse intensity in the central region 114. Further, the pulse intensity increases at each level incrementally toward the end of the scanning range 110.

Fig. 8 is a diagram showing a second modification example of the change in pulse intensity according to the present embodiment. In this modification example, the control unit 18 continuously changes the intensity of the pulsed light in the first direction 101. The region 201 is a region where the pulse interval is equal to or greater than 5 µs. The region 202 is a region where the pulse interval is shorter than 5 µs. In this modification example, the intensity of the pulsed light is changed linearly within the region 201. By doing so, as in the first modification example, the amount of change in pulse intensity between adjacent pulses can be reduced, and the operation of the measuring apparatus 10 can be stabilized. In this modification example as well, the pulse intensity in the end part region 112 is higher than the pulse intensity in the central region 114. Further, the pulse intensity increases for each pulse toward the end of the scanning range 110.

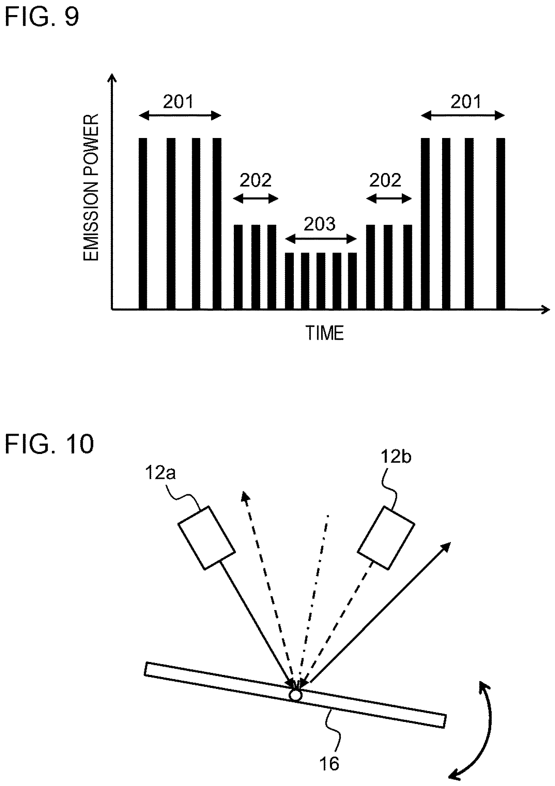

Fig. 9 is a diagram showing a third modification example of the change in pulse intensity according to the present embodiment. In this modification example, the control unit 18 changes the intensity of the pulsed light in three or more levels in the first direction 101. The region 201 is a region where the pulse interval is equal to or greater than 5 µs. The region 202 is a region where two pulses are emitted within 5 µs. A region 203 is a region where three pulses are emitted within 5 µs. In the region 203, the pulse interval is equal to or greater than 1.7 µs and less than 2.5 µs. The upper limit of the pulse intensity defined by the second condition in the region 201 is three times the upper limit of the pulse intensity in the region 203. The region 203 includes the central region 114. The region 201 includes the end part region 112. For example, the intensity of each pulse of the end part region 112 is equal to or greater than 2.9 times and equal to or less than 3.1 times the intensity of each pulse in the central region 114. In the example of this diagram, the total pulse intensity within 5 µs in the end part region 112 may be equal to or greater than 90% and equal to or less than 110% of the total pulse intensity within 5 µs in the central region 114.

In this modification example, the pulse intensity within the region 201 is constant, the pulse intensity within the region 202 is constant, and the pulse intensity within the region 203 is constant. However, the pulse intensity within the region 201 may not be constant, the pulse intensity within the region 202 may not be constant, and the pulse intensity within the region 203 may not be constant. The intensity of each pulse in the region 201 is greater than the intensity of each pulse in the region 202, and the intensity of each pulse in the region 202 is greater than the intensity of each pulse in the region 203. The average intensity of the pulses of light in the region 201 is greater than the average intensity of the pulses of light in the region 202, and the average intensity of the pulses of light in the region 202 is greater than the average intensity of the pulses of light in the region 203. However, the pulse intensity pattern is not limited to the example of this diagram.

Although a plurality of pulse intensity change patterns have been described as examples above, the pulse intensity change pattern according to the present embodiment is not limited to these examples. Other pulse intensities can be set variously within the range satisfying the first to third conditions as long as pulsed light having a higher intensity is emitted to the end part region 112 than to the central region 114.

Further, in the present embodiment, an example has been described in which the pulse intensities of the end part regions 112 at both ends are the same, but the pulse intensities of the end part regions 112 at both ends may be different from each other. Among the end part regions 112 on both sides, only one end part region 112 may have a pulse intensity higher than the pulse intensity of the central region 114, or both the end part regions 112 may have pulse intensities higher than the pulse intensity of the central region 114. Further, for example, in a case where a raster scan is performed, the pulse intensity patterns may be different from or the same as each other in a plurality of scanning lines in the first direction 101.

As described above, according to the present embodiment, the control unit 18 emits the pulsed light having a higher intensity to the end part region 112 including the end of the scanning range in the first direction 101 than to the central region 114 including the center of the scanning range in the first direction 101. Therefore, it is possible to increase the measurable distance or improve the measurement accuracy, in the region of the end of the scanning range.

### (Second Embodiment)

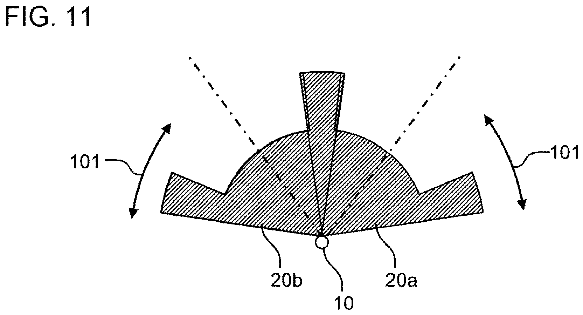

Fig. 10 is a diagram illustrating a relationship between a light emitting element 12 and a movable mirror 16 according to a second embodiment. Fig. 11 is a diagram illustrating a measurable region of a measuring apparatus 10 according to the present embodiment. The measuring apparatus 10 according to the present embodiment is the same as the measuring apparatus 10 according to the first embodiment except for the points to be described below.

The measuring apparatus 10 according to the present embodiment includes two light emitting elements 12. The scanning range by the pulsed light from one light emitting element 12 (first light emitting element 12a) and the scanning range by the pulsed light from the other light emitting element 12 (second light emitting element 12b) are adjacent to each other in the first direction 101. The details will be described below.

In the measuring apparatus 10 according to the present embodiment, measurement is performed using each of the pulsed light from the first light emitting element 12a and the pulsed light from the second light emitting element 12b. In addition, in the measuring apparatus 10, the light from the two light emitting elements 12 are reflected by the same movable mirror 16. By doing so, the emission direction of the pulsed light from the first light emitting element 12a and the emission direction of the pulsed light from the second light emitting element 12b are changed while being synchronized. As a result, the emission direction of the pulsed light from the first light emitting element 12a and the emission direction of the pulsed light from the second light emitting element 12b do not intersect. Since the emission direction of the pulsed light from the first light emitting element 12a and the emission direction of the pulsed light from the second light emitting element 12b can always be shifted, it is safer for people around.

In the present embodiment, the control unit 18 also controls the pulse intensity of the end part region 112 to be higher than the pulse intensity of the central region 114 in each of the scanning range by the pulsed light from the first light emitting element 12a and the scanning range by the pulsed light from the second light emitting element 12b. Therefore, the measurable distance can be increased at the end of each scanning range in the first direction 101 direction. In addition, the S/N ratio becomes high, and the measurement accuracy can be enhanced, at the end of each scanning range.

As shown in Fig. 11, the measurable region of the measuring apparatus 10 according to the present embodiment is a region obtained by summing a measurable region 20a by the first light emitting element 12a and a measurable region 20b by the second light emitting element 12b. Since the measurable distances at the ends of the scanning range are long in each of the measurable region 20a and the measurable region 20b, the measurable distance of the measuring apparatus 10 as a whole can be increased not only near the ends of the scanning range but also near the center. In addition, the measurement accuracy of the measuring apparatus 10 as a whole can be enhanced not only near the ends of the scanning range but also near the center. The end of the scanning range of the first light emitting element 12a and the end of the scanning range of the second light emitting element 12b may or may not overlap each other. However, it is preferable that the scanning range of the first light emitting element 12a and the scanning range of the second light emitting element 12b are continuous in the first direction 101 direction without a gap therebetween.

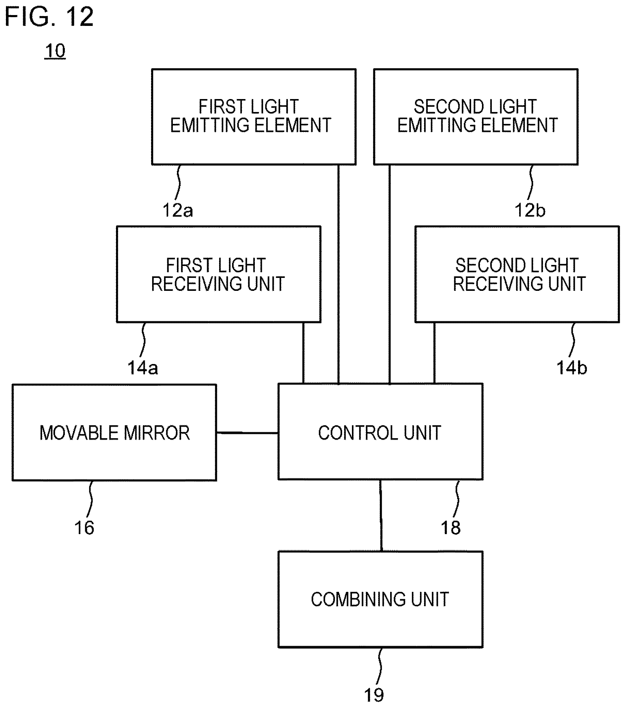

Fig. 12 is a block diagram illustrating a functional configuration of the measuring apparatus 10 according to the present embodiment. The measuring apparatus 10 according to the present embodiment further includes a first light receiving unit 14a, a second light receiving unit 14b, and a combining unit 19. The pulsed light output from the first light emitting element 12a is reflected by the movable mirror 16 and emitted to the outside of the measuring apparatus 10. Then, the pulsed light reflected by the external object returns to the measuring apparatus 10 and is received by the first light receiving unit 14a. Further, the pulsed light output from the second light emitting element 12b is reflected by the movable mirror 16 and emitted to the outside of the measuring apparatus 10. Then, the pulsed light reflected by the external object returns to the measuring apparatus 10 and is received by the second light receiving unit 14b.

The control unit 18 according to the present embodiment controls the first light emitting element 12a, the second light emitting element 12b, the first light receiving unit 14a, the second light receiving unit 14b, and the movable mirror 16. Further, the control unit 18 receives signals from the first light receiving unit 14a and the second light receiving unit 14b and calculates the distance from the measuring apparatus 10 to the object, as in the first embodiment. Specifically, the control unit 18 calculates the measurement result of the scanning range by the first light emitting element 12a based on the output timing of the first light emitting element 12a and the light reception timing of the first light receiving unit 14a. In addition, the control unit 18 calculates the measurement result of the scanning range by the second light emitting element 12b based on the output timing of the second light emitting element 12b and the light reception timing of the second light receiving unit 14b. The combining unit 19 acquires the measurement result of the scanning range by the first light emitting element 12a and the measurement result of the scanning range by the second light emitting element 12b from the control unit 18 and combines the measurement results. Then, the combining unit 19 outputs the result obtained through the combining as the measurement result of one continuous region. The combining unit 19 can combine the measurement result by the first light emitting element 12a and the measurement result by the second light emitting element 12b based on a predetermined positional relationship between the scanning range of the first light emitting element 12a and the scanning range of the second light emitting element 12b. In a case where the measurement result by the first light emitting element 12a and the measurement result by the second light emitting element 12b are each an image, the combining unit 19 generates one image in which the images are combined.

The combining unit 19 is implemented using, for example, the integrated circuit 80 shown in Fig. 2. The storage device 808 further stores a program module for implementing the function of the combining unit 19. The processor 804 reads out and executes the program module on the memory 806, thereby further implementing the function of the combining unit 19.

As described above, according to the present embodiment, the same operations and effects as in the measuring apparatus 10 according to the first embodiment can be obtained. In addition, the scanning range by the pulsed light from the first light emitting element 12a and the scanning range by the pulsed light from the second light emitting element 12b are adjacent to each other in the first direction 101. Therefore, it is possible to increase the measurable distance near the center and improve the measurement accuracy, in the scanning range of the entire measuring apparatus 10.

### (Third Embodiment)

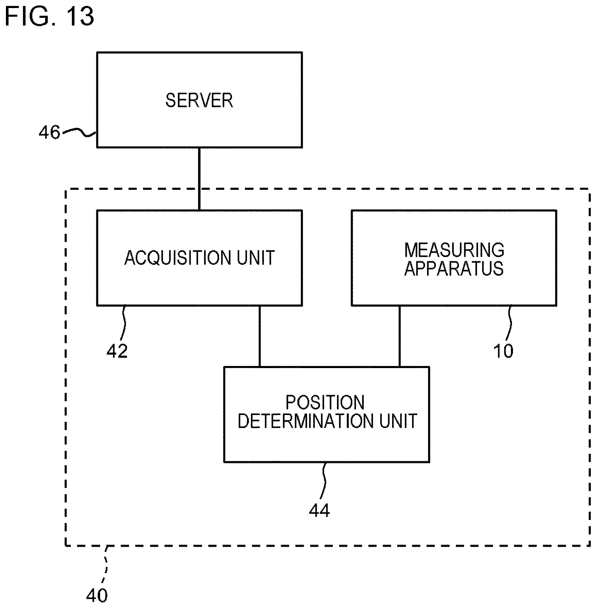

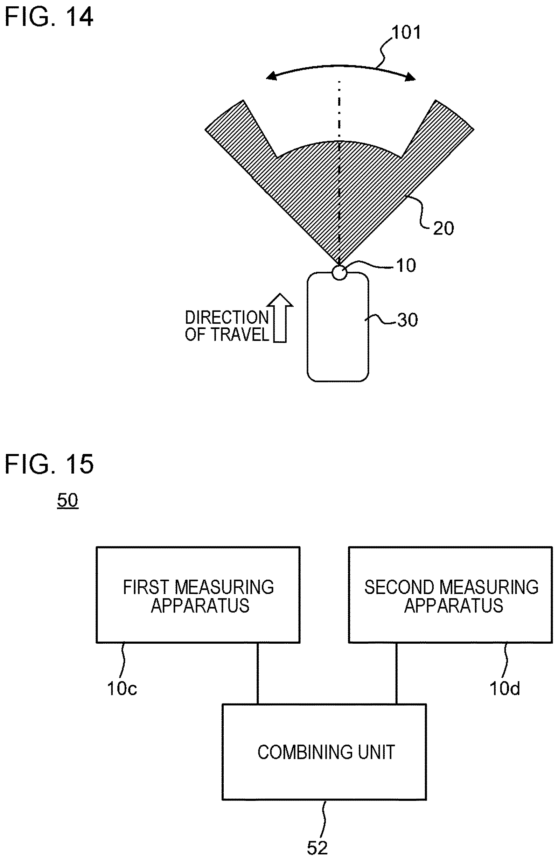

Fig. 13 is a block diagram illustrating the configuration of a position determination system 40 according to a third embodiment. Fig. 14 is a diagram illustrating a usage environment of the position determination system 40 according to the present embodiment.

The position determination system 40 according to the present embodiment includes the measuring apparatus 10, an acquisition unit 42, and a position determination unit 44. The measuring apparatus 10 is provided with a moving object 30. The acquisition unit 42 acquires map information. The position determination unit 44 determines the position of the moving object 30 based on the acquired map information and the measurement result of the measuring apparatus 10. The measuring apparatus 10 is the same as the measuring apparatus 10 according to at least one of the first and second embodiments. The details will be described below.

The moving object 30 is, for example, a vehicle, and the measuring apparatus 10 is attached to the front center of the moving object 30. However, the measuring apparatus 10 may be attached to the rear center of the moving object 30. The position determination system 40 is a system that determines the position of the moving object 30.

The acquisition unit 42 and the position determination unit 44 are implemented using, for example, the integrated circuit 80 shown in Fig. 2. The storage device 808 stores program modules for implementing the functions of the acquisition unit 42 and the position determination unit 44, respectively. The processor 804 reads out and executes the program modules on the memory 806, thereby further implementing the functions of the acquisition unit 42 and the position determination unit 44.

The map information is held in advance in a server 46 such as a map information providing service, for example. The map information includes three-dimensional information of structures such as buildings and signs, and their position information (for example, latitude and longitude). The position determination system 40 communicates with the external server 46, and the acquisition unit 42 acquires the map information from the server 46. In a case where the moving object 30 is provided with a GPS or the like, the acquisition unit 42 need only acquire only map information around the moving object 30 based on the position information of the moving object 30.

The measuring apparatus 10 detects an object around the moving object 30 by performing measurement. In the measuring apparatus 10, as shown in Figs. 6 and 11, the measurable distance can be increased near the ends of the scanning range, and highly accurate measurement can be performed. As a result, in a case where the moving object 30 to which the measuring apparatus 10 is attached travels on the road, it is possible to detect structures around the road with high accuracy.

The position determination unit 44 generates accurate position information of the moving object 30 by matching the structure indicated by the map information acquired by the acquisition unit 42 and the structure detected by the measuring apparatus 10. Specifically, the position determination unit 44 calculates the position of the moving object 30 based on the position information in the map information on the matched structure and the distance between the structure obtained by the measuring apparatus 10 and the measuring apparatus 10. Since the measuring apparatus 10 according to the present embodiment can detect structures around the road with particularly high accuracy, it is also possible to improve the accuracy of the position information of the moving object 30, which is generated by the position determination unit 44. Further, the position information generated by the position determination unit 44 can be used to improve, for example, the accuracy of autonomous driving and navigation.

As described above, according to the present embodiment, the same operations and effects as in the measuring apparatus 10 according to the first embodiment can be obtained. In addition, in the position determination system 40 according to the present embodiment, the position determination unit 44 determines the position of the moving object 30 based on the acquired map information and the measurement result of the measuring apparatus 10. Therefore, the accuracy of the position information of the moving object 30 can be improved.

### (Fourth Embodiment)

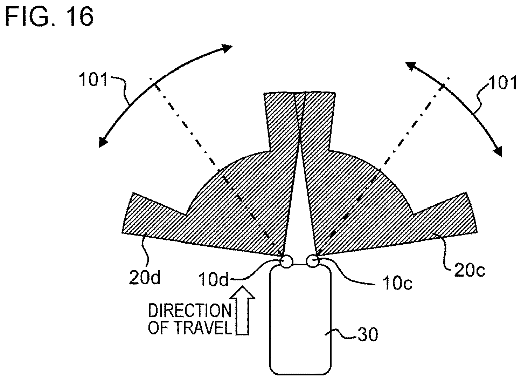

Fig. 15 is a block diagram illustrating a configuration of a measuring system 50 according to a fourth embodiment. Fig. 16 is a block diagram illustrating a usage environment of the measuring system 50 according to the present embodiment. The measuring system 50 according to the present embodiment includes a plurality of measuring apparatuses 10. The scanning range of one measuring apparatus 10 (first measuring apparatus 10c) and the scanning range of another measuring apparatus 10 (second measuring apparatus 10d) are adjacent to each other in the first direction 101. The measuring apparatus 10 is the same as the measuring apparatus 10 according to at least one of the first and second embodiments. The details will be described below.

In the measuring system 50 according to the present embodiment, measurements are performed by the first measuring apparatus 10c and the second measuring apparatus 10d. In the present embodiment, the control unit 18 of each of the measuring apparatuses 10 controls the pulse intensity of the end part region 112 to be higher than the pulse intensity of the central region 114 in the scanning range. Therefore, the measurable distance can be increased at the end of each scanning range in the first direction 101 direction. In addition, the S/N ratio becomes high, and the measurement accuracy can be enhanced, at the end of each scanning range.

For example, the first measuring apparatus 10c and the second measuring apparatus 10d are attached side by side near the front center of the moving object 30 such as a vehicle. However, the first measuring apparatus 10c and the second measuring apparatus 10d may be attached to the rear center of the moving object 30.

The measurable region of the measuring system 50 according to the present embodiment is a region obtained by summing a measurable region 20c by the first measuring apparatus 10c and a measurable region 20d by the second measuring apparatus 10d, as shown in Fig. 16. Since the measurable distances at the ends of the scanning range are long in each of the measurable region 20c and the measurable region 20d, the measurable distance of the measuring system 50 as a whole can be increased not only near the ends of the scanning range but also near the center. In addition, the measurement accuracy of the measuring system 50 as a whole can be enhanced not only near the ends of the scanning range but also near the center. The end of the scanning range of the first measuring apparatus 10c and the end of the scanning range of the second measuring apparatus 10d may or may not overlap each other. However, it is preferable that the scanning range of the first measuring apparatus 10c and the scanning range of the second measuring apparatus 10d are continuous in the first direction 101 without a gap therebetween.

The processing of the measuring system 50 will be described in more detail with reference to Fig. 15. The measuring system 50 according to the present embodiment further includes a combining unit 52. The combining unit 52 acquires measurement results from the first measuring apparatus 10c and the second measuring apparatus 10d and combines the measurement results. Then, the combining unit 52 outputs the result obtained through the combining as the measurement result of one continuous region. The combining unit 52 can combine the measurement result of the first measuring apparatus 10c and the measurement result of the second measuring apparatus 10d based on the predetermined positional relationship between the scanning range of the first measuring apparatus 10c and the scanning range of the second measuring apparatus 10d. In a case where the measurement result of the first measuring apparatus 10c and the measurement result of the second measuring apparatus 10d are each an image, the combining unit 52 generates one image in which the images are combined.

The combining unit 19 is implemented using, for example, the integrated circuit 80 shown in Fig. 2. The storage device 808 further stores a program module for implementing the function of the combining unit 19. The processor 804 reads out and executes the program module on the memory 806, thereby further implementing the function of the combining unit 19.

In the present embodiment, emission outlets of pulsed light of the plurality of measuring apparatuses 10 are preferably at least 1 cm apart from each other. By doing so, it is possible to avoid irradiating the human body around with pulsed light from the same direction at the same time, which is safe.

In addition, in the present embodiment, it is preferable that the emission directions of the plurality of measuring apparatuses 10 are synchronized. A synchronized state is, for example, a state in which the angle formed by the emission directions is constant. By doing so, the emission direction of the pulsed light from the first measuring apparatus 10c and the emission direction of the pulsed light from the second measuring apparatus 10d do not intersect. Since the emission direction of the pulsed light from the first measuring apparatus 10c and the emission direction of the pulsed light from the second measuring apparatus 10d can always be shifted, it is safer for people around.

As described above, according to the present embodiment, the same operations and effects as in the measuring apparatus 10 according to the first embodiment can be obtained. In addition, the scanning range of the first measuring apparatus 10c and the scanning range of the second measuring apparatus 10d are adjacent to each other in the first direction 101. Therefore, it is possible to increase the measurable distance near the center and improve the measurement accuracy, in the scanning range of the entire measuring system 50.

### (Fifth Embodiment)

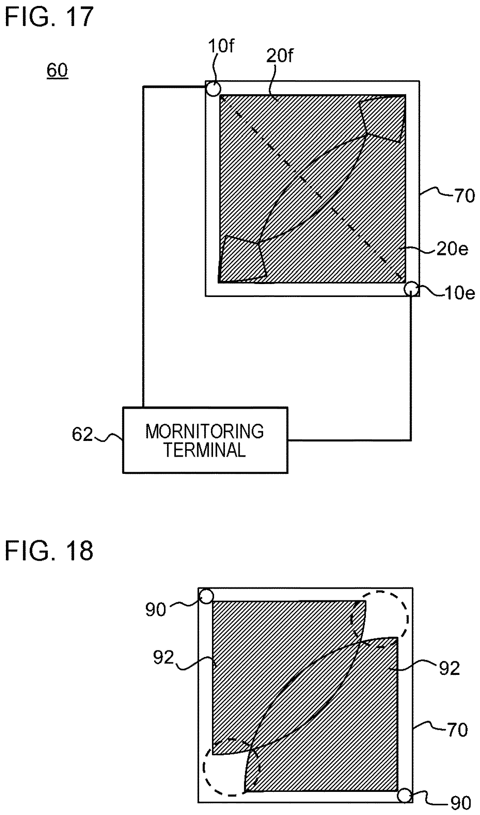

Fig. 17 is a diagram illustrating a configuration and a usage environment of a monitoring system 60 according to a fifth embodiment. The monitoring system 60 according to the present embodiment includes two or more measuring apparatuses 10. One measuring apparatus 10 (third measuring apparatus 10e) and another measuring apparatus 10 (fourth measuring apparatus 10f) are provided to face each other in a plan view. The measuring apparatus 10 according to the present embodiment is the same as the measuring apparatus 10 according to at least one of the first and second embodiments. The details will be described below.

This diagram shows the monitoring system 60 that monitors a rectangular monitoring target region 70 using the third measuring apparatus 10e and the fourth measuring apparatus 10f. The monitoring target region 70 is, for example, the inside of one room. However, the monitoring target region 70 may be a corridor or a specific indoor region, or may be outdoors. The third measuring apparatus 10e is installed at one corner of the monitoring target region 70, for example, near the ceiling. In addition, the fourth measuring apparatus 10f is installed near the ceiling at the corner located diagonally opposite to the corner where the third measuring apparatus 10e is provided. However, the height at which the third measuring apparatus 10e and the fourth measuring apparatus 10f are installed is not particularly limited.

As described above, the third measuring apparatus 10e and the fourth measuring apparatus 10f are provided to face each other in a plan view. The facing state is, for example, a state in which the angle at which the center lines of the scanning ranges (angles of view) of the measuring apparatuses 10 intersect is equal to or less than 45 degrees.

Fig. 18 is a diagram showing a comparative example of the monitoring system. In this comparative example, the monitoring target region 70 is monitored by two measuring apparatuses 90. In addition, a measurable region 92 of each measuring apparatus 90 is shown in this diagram. In this comparative example, the intensity of the pulsed light of the measuring apparatus 90 is constant, and the measurable distance is constant. As a result, there are regions surrounded by dashed lines in this diagram, that is, regions where any of the measuring apparatuses 90 cannot perform measurement near the corners of the monitoring target region 70 at which no measuring apparatuses 90 are provided.

On the other hand, with the monitoring system 60 according to the present embodiment shown in Fig. 17, since the measurable distances near the ends of the scanning range of each measuring apparatus 10 are long, the monitoring target region 70 can be monitored even near the corners at which no measuring apparatuses 10 are provided. In this diagram, a measurable region 20e covered by the third measuring apparatus 10e and a measurable region 20f covered by the fourth measuring apparatus 10f encompass the corners of the monitoring target region 70. In this way, it is also possible to monitor a region that is prone to a blind spot, such as the edges or corners of the monitoring target region 70.

The monitoring system 60 further includes a monitoring terminal 62. The monitoring terminal 62 is, for example, a general-purpose computer, a mobile terminal, or the like. The measurement results by the third measuring apparatus 10e and the fourth measuring apparatus 10f are displayed on a screen of the same monitoring terminal 62. By doing so, a monitoring person can simultaneously confirm the measurement result by the third measuring apparatus 10e and the measurement result by the fourth measuring apparatus 10f and can efficiently monitor the monitoring target region 70.

As described above, according to the present embodiment, the same operations and effects as in the measuring apparatus 10 according to the first embodiment can be obtained. In addition, the third measuring apparatus 10e and the fourth measuring apparatus 10f are provided to face each other in a plan view. By doing so, it is also possible to monitor a region that is prone to a blind spot, such as the edges or corners of the monitoring target region 70.

Although the embodiments have been described above with reference to the drawings, these are examples of the present invention, and various configurations other than the above can also be employed.

This application claims priority on the basis of Japanese Patent Application No. 2021-038082 filed on March 10, 2021, the entire disclosure of which is incorporated herein by reference.

### REFERENCE SIGNS LIST

- 10: measuring apparatus
- 12: light emitting element
- 14: light receiving unit
- 15: perforated mirror
- 16: movable mirror
- 17: condenser lens
- 18: control unit
- 19: combining unit
- 20: measurable region
- 30: moving object
- 40: position determination system
- 42: acquisition unit
- 44: position determination unit
- 46: server
- 50: measuring system
- 52: combining unit
- 60: monitoring system
- 62: monitoring terminal
- 70: monitoring target region
- 80: integrated circuit
- 101: first direction
- 110: scanning range
- 112: end part region
- 114: central region

## Claims

1. A measuring apparatus that scans and measures a target with pulsed light, the measuring apparatus comprising:
a light emitting element configured to emit the pulsed light;
a light receiving unit configured to receive the reflected pulsed light;
a movable mirror configured to change an emission direction of the pulsed light; and
a control unit configured to control a light emission intensity of the light emitting element,
wherein a reflecting surface of the movable mirror is oscillated in a sinusoidal waveform so that the emission direction of the pulsed light reciprocates back and forth in a first direction, and
the control unit is configured to emit the pulsed light having a higher intensity to an end part region including an end of a scanning range in the first direction than to a central region including a center of the scanning range in the first direction.

2. The measuring apparatus according to claim 1,
wherein an emission angle of the pulsed light changes at equal angular deviation.

3. The measuring apparatus according to claim 1 or 2,
wherein an emission interval of the pulsed light in the central region is less than 5 µs, and an emission interval of the pulsed light in the end part region is equal to or greater than 5 µs.

4. The measuring apparatus according to any one of claims 1 to 3,
wherein a total pulse intensity within 5 µs in the end part region is equal to or greater than 90% and equal to or less than 110% of a total pulse intensity within 5 µs in the central region.

5. The measuring apparatus according to any one of claims 1 to 4,
wherein the control unit is configured to change an intensity of the pulsed light in three or more levels in the first direction.

6. The measuring apparatus according to any one of claims 1 to 5,
wherein the control unit is configured to continuously change an intensity of the pulsed light in the first direction.

7. The measuring apparatus according to any one of claims 1 to 6,
wherein the control unit is configured to control the light receiving unit such that a signal multiplication factor of the light receiving unit in the end part region is lower than a signal multiplication factor of the light receiving unit in the central region.

8. The measuring apparatus according to any one of claims 1 to 7,
wherein two light emitting elements are provided as the light emitting element, and
the scanning range by the pulsed light from one of the light emitting elements and the scanning range by the pulsed light from the other of the light emitting elements are adjacent to each other in the first direction.

9. A position determination system comprising:
the measuring apparatus according to any one of claims 1 to 8 provided with a moving object;
an acquisition unit configured to acquire map information; and
a position determination unit configured to determine a position of the moving object based on the acquired map information and a measurement result of the measuring apparatus.

10. A measuring system comprising:
a plurality of the measuring apparatuses according to any one of claims 1 to 8,
wherein the scanning range of one of the measuring apparatuses and the scanning range of another one of the measuring apparatuses are adjacent to each other in the first direction.

11. The measuring system according to claim 10,
wherein emission outlets of the pulsed light of the plurality of measuring apparatuses are at least 1 cm apart from each other.

12. The measuring system according to claim 10 or 11,
wherein emission directions of the plurality of measuring apparatuses are synchronized with each other.

13. A monitoring system comprising:
two or more measuring apparatuses according to any one of claims 1 to 8,
wherein one of the measuring apparatuses and another one of the measuring apparatuses are provided to face each other in a plan view.
